Europäisches Patentamt

European Patent Office

Office européen des brevets

(11) Publication number: **0 092 951**
A1

# (12) EUROPEAN PATENT APPLICATION

(21) Application number: 83302166.0

(22) Date of filing: 18.04.83

(51) Int. Cl.³: **B 62 D 49/06**
**A 01 M 7/00**

(30) Priority: 19.04.82 GB 8211268

(43) Date of publication of application:
02.11.83 Bulletin 83/44

(84) Designated Contracting States:
AT BE DE FR GB IT NL SE

(71) Applicant: SANDS AGRICULTURAL MACHINERY
LIMITED

Ingham, Norwich Norfolk NR12 9TA(GB)

(72) Inventor: Sands, Thomas Neal
c/o Sands Agricultural Machinery Limited
Ingham Norwich Norfolk NR12 9TA(GB)

(72) Inventor: Cotter, Bari
c/o Sands Agricultural Machinery Limited
Ingham Norwich Norfolk NR12 9TA(GB)

(74) Representative: Jones, William
Old Bank of England Court Queen Street
Norwich NR2 4SX(GB)

(54) Self-propelled crop spraying vehicle.

(57) A self-propelled crop spraying vehicle, having four ground-engaging wheels or wheel sets arranged in respective front and rear pairs, is characterised in that there is no axle extending along any common rotational axis of the wheels of either the front or the rear pair, and in that the drive to the or each driven ground-engaging wheel is a fluid drive to a motor-in-wheel unit (17, 18). The vehicle chassis rides on a fluid-sprung suspension system (24, 25) which allows the vehicle chassis to be set at different ride heights. Up-and-down movements of the steerable wheels are cushioned, and a flat-bed region (35) enables the vehicle to drive in under a initially separate demountable spray-boom-carrying unit and receive the unit on the flat-bed.

./...

Fig.2.

- 1 -

## SELF-PROPELLED CROP SPRAYING VEHICLE

The invention relates to a self-propelled crop spraying vehicle which has four ground-engaging wheels or wheel sets arranged in respective front and rear pairs and which preferably has a forward-mounted control cab.

Such a vehicle will be referred to from now on as a vehicle of the kind in question.

According to one broad aspect of the invention, a vehicle of the kind in question is characterised by the following combination of features, that there is no axle extending along any common rotational axis of the wheels of either the front or the rear pair, and that the drive to the or each driven ground-engaging wheel is a fluid drive to a motor-in-wheel unit.

According to another broad aspect of the invention, a vehicle of the kind in question is characterised by the feature that the vehicle chassis rides on a fluid-sprung suspension system.

For example the spray-boom-supporting end of the vehicle may be connected to the adjacent pair of ground-engaging wheels by such a system.

The suspension system may be a variable-height system which allows the vehicle chassis to be set at different mean ride heights, and/or locked at selected heights,

body

- 2 -                                    0092951

above one or both pairs of ground-engaging wheels.

The system may comprise a ram, pivoted between the vehicle chassis and a ground-engaging wheel, and in circuit with a fluid accumulator.

According to another broad aspect of the invention, a vehicle of the kind in question has its steerable wheels steering about individual king pins at opposite ends of a beam which is pivotted to the vehicle chassis to allow up-and-down movement of each steerable wheel and which incorporates, in its pivot region, means to cushion such up-and-down movements.

According to another broad aspect of the invention, a vehicle of the kind in question exhibits a flat-bed region at its boom-supporting end which enables the vehicle to drive in under an initially separate demountable boom-carrying unit and receive the unit on the flat-bed.

A vehicle of the kind in question may according to the invention embody any combination of these broad aspects within the overall inventive concept.

One self-propelled crop spraying vehicle embodying the invention is illustrated in the accompanying diagrammatic drawings. It is currently the best way known to the applicants of putting the invention into practice. It will now be described with reference to the drawings, in which:

Figure 1 shows the vehicle in perspective;

Figure 2 shows the chassis and rear suspension of the vehicle, again in perspective;

Figure 3 shows the front suspension and steering assembly of the vehicle in perspective; and

Figure 4 is a diagram of the hydraulic circuit for varying the rear suspension height and for steering the vehicle.

The vehicle shown is a forward-control self-propelled crop spraying vehicle. The overall layout of conventional vehicles of this kind is well known and is exemplified by the existing SAM forward-control sprayer manufactured in the United Kingdom by the applicants and based on a David Brown 995 Skid Unit.

Like that conventional sprayer, the vehicle illustrated has respective front and rear pairs of ground-engaging wheels 11, 12 supporting a chassis which in turn supports an enclosed forward-mounted operator's cab 13 behind which are situated, respectively, on the chassis the prime power unit 14, the spray-fluid-containing tank 15 and the foldable boom 16 (only one half of which is shown for clarity). The illustrated vehicle has row crop wheels but can be adapted readily to take low-ground-pressure flotation wheels.

The boom folding, trimming and height-adjusting means, and the mode of spray delivery and control, form no inventive part of the present vehicle and the reader familiar with conventional vehicles of this kind need not be told how to construct them.

The illustrated vehicle differs, however, in several major inventive respects from the conventional forward-control self-propelled crop spraying vehicle. First, it is not built around an engine-transmission-back axle skid unit. Instead, the prime power unit 14 is an air cooled Deutz Diesel engine which drives a hydrostatic pump (not referenced) supplying fluid under pressure through flexible driveline hoses to each of two Poclain motor-in-wheel hydrostatic drive units which carry each of the wheels 12 of the rear pair of ground-engaging wheels.

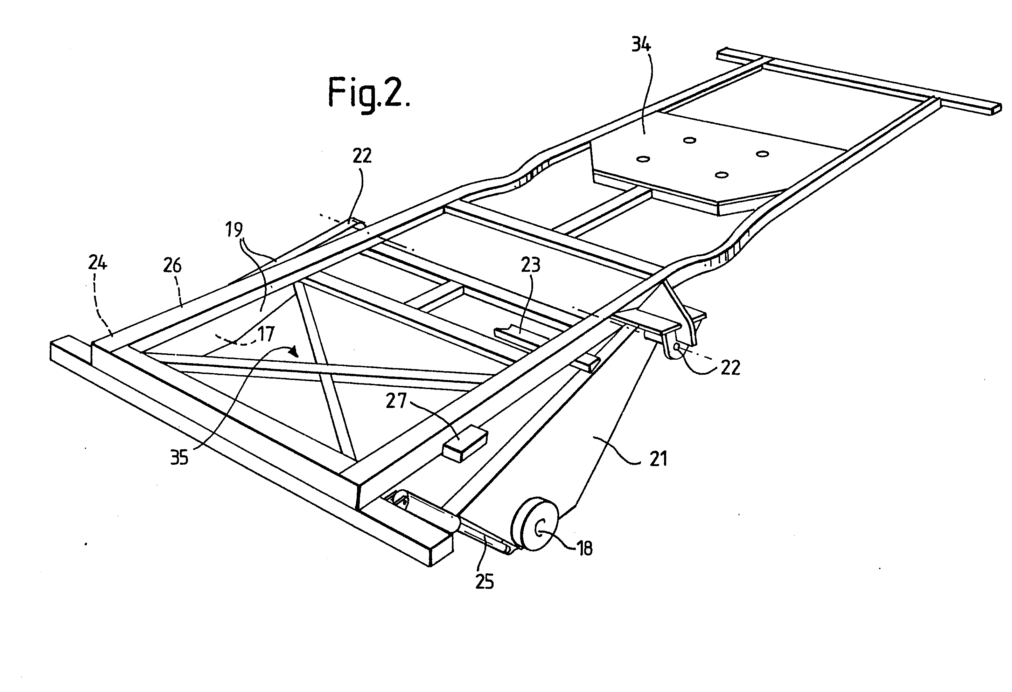

Thus, although the two rear wheels 12 lie on a common rotational axis in this particular vehicle, there is no axle extending along that axis.    Instead, the two motor-in-wheel units 17, 18 are each carried on a suspension arm referenced respectively 19, 21 in Figure 2 and swinging about a common pivot axis 22 spanning the chassis frame just behind the engine 14 .

In this particular vehicle, the two rear suspension arms 19, 21 are joined by a cross beam 23 so that they swing together about the pivot axis 22.    The swinging movement of these arms 19, 21 is cushioned by rams 24, 25 each of which connects the rear end of the chassis to a respective one of the two arms 19, 21 and each of which, as Figure 2 shows, is substantially vertical when the vehicle is viewed end-on but slopes backwards at about 25 degrees to the vertical when the vehicle is viewed from the side.

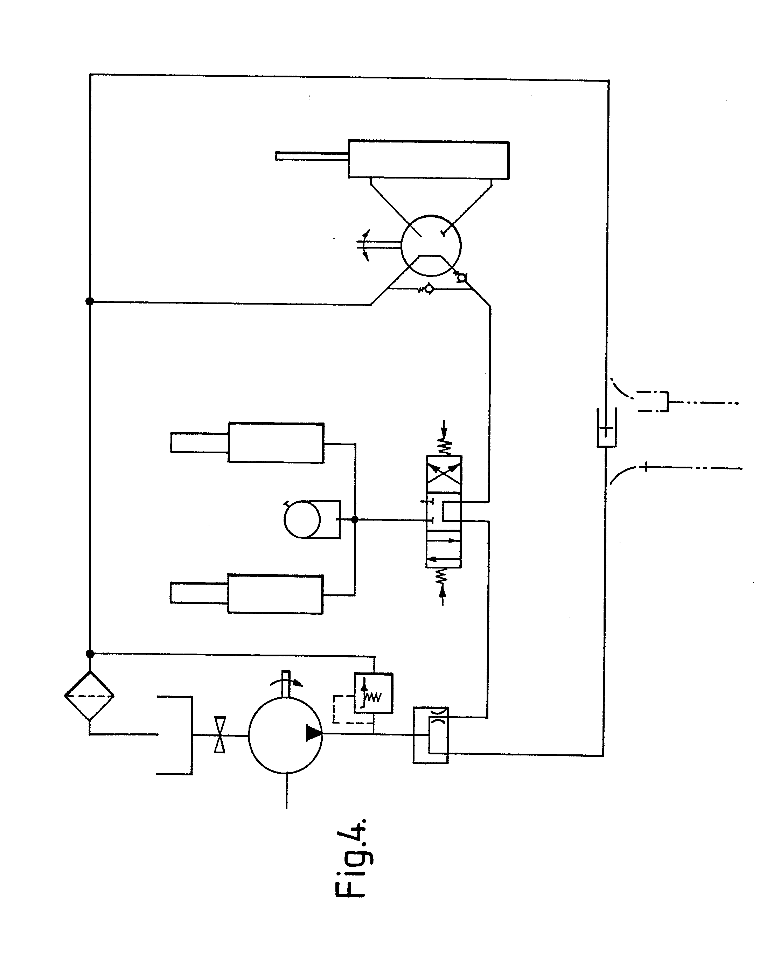

The rams 24, 25 form part of a fluid-sprung suspension system.    They are hydraulic single-acting rams and are each in circuit with a nitrogen-filled accumulator which is carried on one of the chassis cross-members.    Figure 4 shows the circuitry supplying the rams from the engine-driven pump and also shows the position of the accumulator.

Bump rubbers 26, 27 are mounted on each opposite side of the chassis frame to limit the upward movement of the swinging suspension arms 19, 21.

The steerable pair of ground-engaging wheels 11 are carried immediately in front of the engine 14 on the chassis and beneath the cab 13.    The wheels 11 are carried on stub-axles 28, 29 which, as shown in Figure 3, are themselves carried at opposite ends of a beam 31. A double-acting hydraulic steering ram 32 is pivoted at one end to the beam 31 and at its other end to a drop arm 38 projecting from one of the king pins, 28.    A drag link 33 ties the two king pins 28, 29 together and transmits the steering movements of the ram 32 simultaneously to both steerable wheels 11.

Figure 4 again shows the way the hydraulic circuitry is arranged to supply pressure to the steering ram 32.

A plate 34 is bolted to the underside of the vehicle chassis in a location indicated in Figure 2 and carries the steering beam sub-assembly. Trunnions 34a, 34b span the gap between the pivot bushes 31a, 31b of the steering beam 31, and a pin (not shown) yokes the beam 31 pivotally to the plate 34 via the trunnions 34a, 34b.

Dunlop METALASTIK HD2 bushes (METALASTIK is a trade mark) space the plate 34 from the underside of the chassis and cushion the pivotal movements of the beam 31 about its pivot. There are four of these METALASTIK units, one at each corner of the plate 34, and by cushioning and limiting the pivotal movements of the beam 31 they effectively cushion the up-and-down movements of the steerable wheels 11 as the vehicle encounters variations in ground contour. The four METALASTIK units are proprietary units and are not shown or referenced in the drawings. They are all mounted at the same radial distance from the centre of the plate 34 and at 90 degree spacings about a 360 degree circumference struck from that radius.

Each of the king pins is angled at 10 degrees to the vertical, and each of the stub-axles 28, 29 is angled at 10 degrees to its respective king pin so that the stub-axles 28, 29 are each parallel with the beam 31. The ram 32, when in position between the drop arm and its point of attachment to the trunnion 34a, runs at right angles to the adjacent king pin and so extends down at 10 degrees below the horizontal, parallel with beam 31.

As Figure 2 shows, the vehicle chassis exhibits a flat-bed region at its boom-supporting end. The region is substantially free of obstruction and enables the vehicle, in use, to drive in under an initially separate boom-carrying unit and receive the unit on the flat-bed. The flat-bed is indicated generally by reference 35 in

Figure 2.

In this particular vehicle the boom-carrying sub-frame also carries the spray tank 15 and the spray-delivering lines which link the tank to the boom nozzles. Appropriate quick-release fluid line couplings are used to connect this sub-unit to the main fluid supply lines on the vehicle.

The rams 24, 25 can be elevated to set the vehicle chassis at selected heights above the rear ground-engaging wheels 12. Thus, at one height, the vehicle can be backed in under the boom-carrying sub-unit and then raised to receive the unit onto the flat-bed 35. The rams can then be set at their normal desired mean ride height. When the unit carrying the boom and spray tank is to be demounted, the rams 24, 25 can be raised and locked hydraulically above the normal ride height; the boom-carrying sub-frame can be supported at each side; and the rams 24, 25 can be retracted again to lower the chassis and enable the vehicle to be driven out from under the boom-carrying unit.

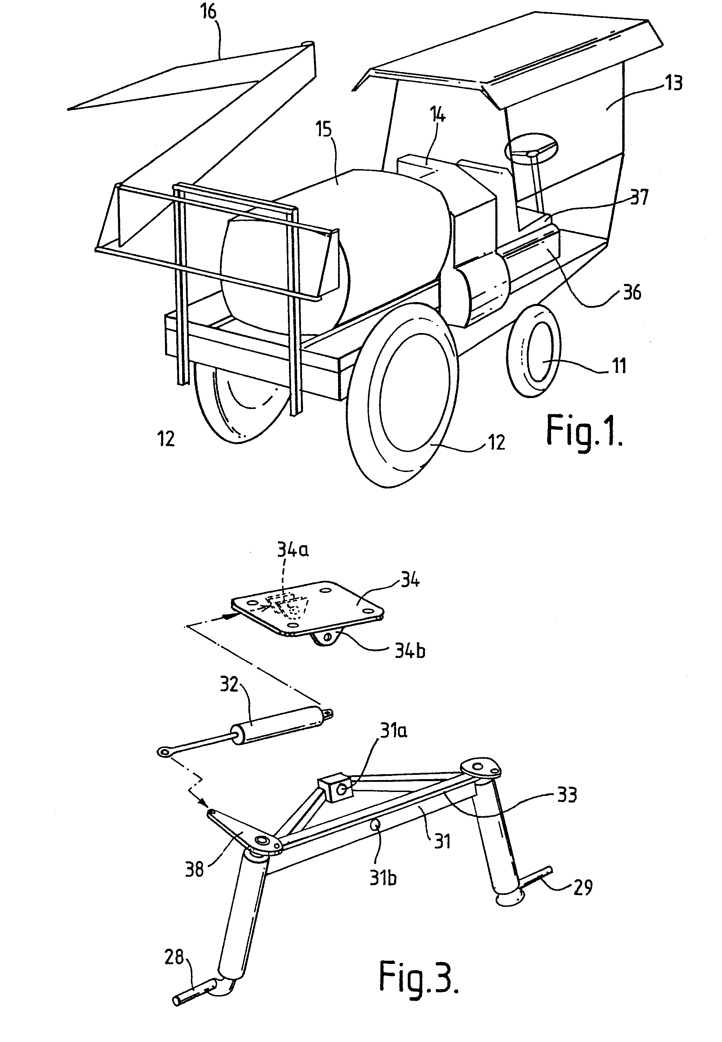

The main hydraulic reservoir tank on the vehicle illustrated is referenced 36 in Figure 1. It is mounted immediately in front of the engine 14, and it extends forward along the chassis into the cab 13. This has two advantages. First, it provides a convenient mounting for the operator's seat 37. Second, on cold days a fan can blow air over the tank and the tank walls will give up their heat (conducted from the hot fluid) to the air which will in turn heat the driver's cab. A shield can be fitted around the tank 36 so that the heat naturally radiated by the hot tank walls need not prove uncomfortable inside the cab where the day is not unduly cold.

The several inventive features of the illustrated vehicle give it many advantages over the conventional self-propelled crop spraying vehicle. The lack of a transaxle on the driven wheels gives far greater clearance beneath the chassis and this means that the vehicle can pass through growing crops without undue damage to the crop. The use of fluid-driven hydrostatic motor-in-wheel units is a feature of proven reliability generally, and the particular units used in the illustrated vehicle are hydrostatically braked primarily and have a secondary mechanical brake which "fails on" under the action of a lever-applying ram. The lack of a conventional transaxle and transmission casing, and the use of an air cooled Diesel engine without radiator or water-pumping equipment, both contribute substantially to the very light weight and hence low ground-print-weight of the vehicle which is important if crops are not to be damaged in the early stages of growth. Mounting the hydraulic reservoir tank 36 low-down, and similarly mounting the engine fuel tank low-down on the other side of the engine from the tank 36, keeps the centre of gravity low and aids stability. The use of pivot-action steering also keeps the centre of gravity of the vehicle constant rather than causing it to shift under steering movement as for example a pivoted-chassis construction would do. The use of front and rear suspension, particularly the rear suspension, is in contrast with conventional units where the boom suspension has to do virtually all the work. The use of a rear suspension with variable ride height enables crops of differing height to be traversed by the vehicle and this feature can take the place of, or add to, the range of boom height adjustment conventionally provided by a boom-raising ram on the boom-carrying sub-frame-unit. The use of a flat-bed in combination with that rear suspension system enables one operator to mount and demount the boom sub-unit from the main vehicle with maximum ease.

The vehicle illustrated can of course be modified within the scope of the invention. For example the swinging arms 19, 21 could move independently of one another but would probably need suitable anti-roll bars fitted. The hydraulic circuitry would of course be modified accordingly.

There are also various practical design features which need not be specifically dwelt on. For example the tank 36 would normally be baffled to stop the centre of gravity of the mass of hydraulic fluid shifting during vehicle movement, and there would be various catwalks and guards along the length of the vehicle over such components as the engine 14 and along each side of the spray tank 15. The skilled reader can readily provide such details.

CLAIMS

1. A self-propelled crop spraying vehicle having four ground-engaging wheels or wheel sets arranged in respective front and rear pairs, and also preferably but optionally having a forward-mounted control cab, characterised in that there is no axle extending along any common rotational axis of the wheels of either the front pair (11) or the rear pair (12), and in that the drive to the or each driven ground-engaging wheel is a fluid drive to a motor-in-wheel unit.

2. A crop spraying vehicle according to Claim 1 and characterised by the further feature that the vehicle chassis rides on a fluid-sprung suspension system.

3. A crop spraying vehicle according to Claim 2 and in which the spray-boom-supporting end of the vehicle is connected to the adjacent pair of ground-engaging wheels by such a system.

4. A crop spraying vehicle according to Claim 2 or Claim 3 and characterised in that the suspension system is a variable-height system which allows the vehicle chassis to be set at different mean ride heights, and/or locked at selected heights, above one or both pairs of ground-engaging wheels.

5. A crop spraying vehicle according to any one of Claims 2 to 4 and in which the suspension system comprises a ram (25), pivoted between the vehicle chassis and a ground engaging wheel and in circuit with a fluid accumulator.

6. A crop spraying vehicle according to any one of the proceding claims, and characterised in that the steerable wheels steer about individual king pins at opposite ends of a beam (31) which is linked to the vehicle chassis in such a way as to allow up-and-down movement of each steerable wheel and which incorporates, in its linkage, means to cushion such up-and-down movement.

7. A crop spraying vehicle according to any of the preceding claims, characterised in that the vehicle exhibits a flat-bed region (35) at its boom-supporting end and which region is so configured as to enable the vehicle to drive in under an initially separate demountable boom-carrying unit and receive the unit on the flat-bed.

8. A crop spraying vehicle according to Claim 7 and in which the demountable boom-carrying unit carries the spray-fluid containing tank (15) and spray lines as well as carrying the boom.

9. A crop spraying vehicle according to any of the preceding claims and characterised in that the reservoir (36) carrying the fluid for the or each motor-in-wheel drive extends into the operator's cab .

10. A crop spraying vehicle according to Claim 9 and characterised in that the reservoir provides a mounting for the operator's seat.

0092951

1/3

Fig.1.

Fig.3.

Fig.2.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | FR-A-2 420 294  (D. DOWLER) <br><br> * Complete document * <br><br>--- | 1,2,4, 5 | B 62 D   49/06 <br> A 01 M   7/00 |
| Y | POWER FARMING, vol. 60, no. 12, December 1981, Sutton "Sprayers with a difference", pages 8-13 <br> * Page 11, column 3, line 65 - page 12, column 1, line 58; corresponding figure * <br><br>--- | 2,5 | |
| Y | FR-A-2 485 451  (SOULE FER ET FROID) <br> * Claims; figures * <br><br>--- | 2,4 | |
| A | US-A-4 206 825  (C. VAN DER LELY) <br> * Column 7, line 59 - column 8, line 32; figure 3 * <br><br>--- | 6 | |
| A | FR-A-2 415 073 (P. REGALDO) <br> * Page 5, line 37 - page 7, line 8; figures 5, 6 * <br><br>--- | 7,8 | A 01 M   7/00 <br> A 01 M   21/00 <br> B 62 D   49/00 |
| A | POWER FARMING, vol. 60, no. 4, April 1981, Sutton, S.D. HOWE "Self-propelled sprayers: cost over capability", pages 18-22 <br><br>---          -/- | | |

TECHNICAL FIELDS SEARCHED (Int. Cl. ³)

The present search report has been drawn up for all claims

| Place of search BERLIN | Date of completion of the search 07-07-1983 | Examiner PETTI P |
|---|---|---|

# European Patent Office

## EUROPEAN SEARCH REPORT

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl. 3) |
|---|---|---|---|
| P,X | POWER FARMING, vol. 62, no. 1, January 1983, Sutton "Spraying machines for '83; self-propelled and versatile", pages 41, 43 <br> * Page 41, column 1, line 1 - column 4, line 24; figure * <br><br> ----- | 1-8 | |
| | | | TECHNICAL FIELDS SEARCHED (Int. Cl. 3) |

The present search report has been drawn up for all claims

| Place of search BERLIN | Date of completion of the search 07-07-1983 | Examiner PETTI P |
|---|---|---|

EPO Form 1503. 03.82